# EUROPÄISCHE PATENTANMELDUNG

(11) **EP 0 681 000 A1**
(43) Veröffentlichungstag der Anmeldung: **08.11.1995**
(21) Anmeldenummer: 95101269.9
(22) Anmeldetag: 31.01.1995
(51) Int. Cl.: C08L 67/06, F21M 7/00

(54) **Gegenstände aus BMC-Formmassen auf Basis ungesättigter Polyester mit verbesserter Oberfläche**

(30) Priorität: 29.04.1994 DE 4415102
(71) Anmelder: BASF Aktiengesellschaft, D-67063 Ludwigshafen (DE)
(72) Erfinder: Zwecker, Joachim, Dr., D-69469 Weinheim (DE); Buhl, Dieter, D-67227 Frankenthal (DE); Hesse, Anton, Dr., D-69469 Weinheim (DE)

(57) **Zusammenfassung**

Die Erfindung betrifft Formkörper mit verbesserten Oberflächeneigenschaften, die hergestellt wurden unter Verwendung von BMC-Formmassen, welche kristalline ungesättigte Polyester, die in Styrol bei Raumtemperatur nicht löslich sind, enthalten.

Besonders bevorzugt ist ein Kondensationsprodukt aus Fumarsäure, eventuell Terephthalsäure und Butandiol-1,4.

Bevorzugte Formmassen enthalten zudem noch einen weiteren ungesättigten Polyester in Form einer Lösung in Styrol, Verstärkungsfasern, Füllstoffe, Polymerisationsinitiatoren sowie gegebenenfalls einen Thermoplast zur Minimierung der Schrumpfung und andere Additive.

Die Massen sind u.a. geeignet zur Darstellung direkt metallisierbarer Scheinwerferreflektoren.

## Beschreibung

Die Erfindung betrifft die Verwendung einer Formmasse auf Basis von ungesättigten Polyesterharzen zur Herstellung von Formkörpern mit verbesserten Oberflächeneigenschaften.

Aus härtbaren, teigigen Polyesterharzen (BMC-Massen) hergestellte Formteile zeichnen sich durch hohe Wärmeformbeständigkeit, gute mechanische Eigenschaften, chemische Beständigkeit und - wenn sie thermoplastische Niederschrumpf-Komponenten (LP-Additive) enthalten - durch beliebig geringe Schwindung aus. Die Oberflächeneigenschaften solcher Formteile lassen aber bei vielen Anwendungsfällen zu wünschen übrig. So zeigen beispielsweise Artikel für den Haushalt- und Sanitärbereich eine zu geringe Kratzfestigkeit. Bei Beschädigungen der Oberfläche können Flüssigkeiten eindringen, was ein unschönes Aussehen des Formteils zur Folge hat. Bei Elektroteilen, z.B. Schaltkästen, und Automobilteilen, z.B. Heckklappen, die aus BMC-Formmassen hergestellt wurden, ist in vielen Fällen die Lackierbarkeit unzureichend, was bei stärkerer Beanspruchung zum Abplatzen des Lacks führen kann.

Kraftfahrzeug-Scheinwerfer enthalten Rotationsparaboloid-Reflektoren, die einen gebündelten, gerichteten Lichtkegel liefern. Diese Reflektoren werden vorwiegend aus BMC-Massen im Spritzgußverfahren hergestellt. Die Innenseite der Reflektoren werden mit einer etwa 1 bis 5 µm dicken Aluminiumschicht bedampft, welche die Reflektion des Lichts bewirkt. Es hat sich gezeigt, daß die Oberfläche des Reflektors eine gewisse Rauhigkeit und Unebenheiten aufweist. Damit eine einwandfreie Haftung der Aluminiumschicht gewährleistet wird und bei der Bedampfung eine perfekt ebene und glatte Reflexionsschicht erhalten wird, werden derzeit die Innenflächen der Scheinwerferreflektoren vor der Bedampfung noch mit einem Lack überzogen. Dazu sind vier aufwendige Arbeitsgänge erforderlich: UV-Vorbehandlung der Oberfläche, Lackieren, Ablüften und Aushärten. Diese Zusammenhänge sind in dem Vortrag "BMC - Fertigung von Scheinwerferreflektoren" von W. Haack bei der Internationalen Fachtagung GFK im Fahrzeugbau, Oktober 1988, publiziert im Tagungshandbuch, zusammengefaßt.

Davon ausgehend stellte sich nun die Aufgabe, die Oberflächeneigenschaften von Formkörpern aus BMC-Formmassen zu verbessern.

Es wurde gefunden, daß diese Aufgabe gelöst wird, wenn die Formmasse 2 bis 12 Gew.-% eines in Styrol unlöslichen, kristallinen Polyesters enthält.

Bevorzugte BMC-Formmassen haben die folgende Zusammensetzung:
A. 8 bis 20 Gew.-% eines ungesättigten Polyesterharzes in Form einer styrolischen Lösung,
B. 2 bis 12 Gew.-% eines in Styrol unlöslichen, kristallinen ungesättigten Polyesters,
C. 0 bis 12 Gew.-% einer Niederschrumpf-Polymerkomponente,
D. 8 bis 20 Gew.-% Verstärkungsfasern,
E. 40 bis 70 Gew.-% Füllstoffe,
F. 0,1 bis 1 Gew.-% Polymerisationsinitiatoren, sowie
G. gegebenenfalls weitere Zusatzstoffe, wobei sich die Prozentzahlen auf 100 addieren.

Zu den einzelnen Komponenten der Formmasse ist folgendes zu sagen:
A. Ungesättigte Polyesterharze sind 50 bis 80 gew.-%ige Lösungen von amorphen ungesättigten Polyestern in 20 bis 50 Gew.-% Monomeren, vorzugsweise in Styrol. Als ungesättigte Polyester eignen sich die üblichen Kondensationsprodukte aus mehrwertigen, insbesondere zweiwertigen Carbonsäuren und deren veresterbaren Derivaten, insbesondere deren Anhydriden, die mit mehrwertigen, insbesondere zweiwertigen Alkoholen esterartig verknüpft sind, und gegebenenfalls zusätzlich Reste einwertiger Carbonsäuren oder einwertiger Alkohole enthalten, wobei zumindest ein Teil der Einsatzstoffe über ethylenisch ungesättigte, copolymerisationsfähige Gruppen verfügen muß.
   Als Alkoholkomponenten eignen sich z.B. Ethylenglykol, Propylenglykol-1,2, Propandiol-1,3, Butandiol-1,3, Butandiol-1,4, Hexandiol-1,6, Hexantriol-1,2,6, Neopentylglykol, Diethylenglykol, Triethylenglykol, Dipropylenglykol, Cyclohexandiol-1,2, hydriertes Bisphenol A, Cyclohexandimethanol, ethoxyliertes Bisphenol A sowie Dihydroxymethyltricyclodecan, Trimethylolpropan, Glycerin und Pentaerythrit.
   Geeignete Carbonsäuren bzw. deren Derivate sind zweibasische olefinisch ungesättigte Carbonsäuren, wie z.B. Maleinsäure, Fumarsäure, Chlormaleinsäure, Itakonsäure, Citraconsäure, Methylenglutarsäure und Mesaconsäure bzw. deren Ester oder vorzugsweise deren Anhydride. In die Polyester können andere modifizierend wirkende zweibasische, ungesättigte und/oder gesättigte, sowie aromatische Carbonsäuren eingebaut werden, z.B. Bernsteinsäure, Glutarsäure, Adipinsäure, Sebacinsäure, o-Phthalsäure, Isophthalsäure, Terephthalsäure, Tetrahydrophthalsäure und Endomethylentetrahydrophthalsäure.
   Bevorzugtes Monomeres ist Styrol. Es kann teilweise durch andere copolymerisierbare Monomere, wie substituierte Styrole, (Meth-)Acrylsäureester oder Vinylester ersetzt sein.
   Die Komponente A ist in den Formmassen in Mengen von 8 bis 20 Gew.-%, vorzugsweise von 12 bis 18 Gew.-% enthalten.
B. Kristalline ungesättigte Polyester sind bei Raumtemperatur in Styrol unlöslich bzw. höchstens in ganz geringen Mengen löslich. Es sind Kondensationsprodukte von symmetrischen Diolen und symmetrischen Dicarbonsäuren, wobei bis zu 40 Mol-%, vorzugsweise weniger als 20 Mol-% der Dicarbonsäurekomponenten und bis zu 20 Mol-% der Diolkomponente auch unsymmetrisch sein kann. Kristalline Polyester sind bekannt, z.B. aus DE-B 1 544 673, US-A 3 510 457, GB-A 1 519 519 und EP-A 83 837. Ih Molekulargewicht liegt im allgemeinen zwischen 500 und 10.000.
   Bevorzugte symmetrische Dicarbonsäure ist Fumarsäure, gegebenenfalls im Gemisch mit Terephthalsäure, Sebacinsäure und Adipinsäure.
   Geeignete symmetrische Diole sind Ethylenglykol, 1,3-Propandiol, 1,4-Butandiol, 1,6-Hexandiol, 1,10-Decandiol, Neopentylglykol und Cyclohexandimethanol.
   Bevorzugtes Diol ist 1,4-Butandiol, gegebenenfalls im Gemisch mit Ethylenglykol.
   Die kristallinen Polyester sind in den erfindungsgemäßen Formmassen in Mengen von 2 bis 12 Gew.-%, vorzugsweise von 3 bis 7 Gew.-% enthalten.
C. Die thermoplastische polymere Verbindung C wirkt bei der Härtung des BMC schrumpfmindernd und verbessert dadurch die Oberflächenqualität des Formteils. Als thermoplastisches Polymer kommen z.B. Polystyrol, schlagfest modifiziertes Polystyrol, Polymethylmethacrylat, Polyethylen, Polyvinylacetat, Ethylenvinylacetatcopolymer und entsprechende Copolymere und Pfropfcopolymere in Frage. Es eignen sich auch gesättigte Polyester und thermoplastische Polyurethane. Ebenfalls geeignet sind kautschukartige Blockcopolymere, insbesondere solche aus Butadien und Styrol.
   Die thermoplastischen Polymeren können auch Carboxylgruppen enthalten. Sie sind in den Formmassen in Mengen von 0 bis 12 Gew.-%, vorzugsweise von 4 bis 7 Gew.-% enthalten. Bei der Herstellung von Artikeln für den Haushalt- und Sanitärbereich kann auf den Zusatz der Niederschrumpf-Polymerkomponente verzichtet werden, nicht jedoch bei Automobil- und Elektroteilen und bei Scheinwerferreflektoren.
D. Als Verstärkungsfasern kommen in Frage anorganische und organische Fasern als Rovings oder Schnittfasern, z.B. aus Glas, Kohlenstoff, Cellulose und synthetische organische Fasern, wie Polyethylen, Polycarbonsäureester, Polycarbonate und Polyamide. Sie sind in den Formmassen vorzugsweise in Mengen von 8 bis 20 Gew.-%, vorzugsweise von 10 bis 15 Gew.-% enthalten. Bevorzugt sind Glasfasern.
E. Geeignete Füllstoffe sind z.B. übliche feinpulverige oder körnige anorganische Füllstoffe, wie Kreide, Kaolin, Quarzmehl, Dolomit, Schwerspat, Aluminiumoxidhydrat, Talkum, Pigmente, Kieselgur und dergleichen. Sie sind in den Formmassen vorzugsweise in Mengen von 40 bis 70 Gew.-%, vorzugsweise von 50 bis 60 Gew.-% enthalten.
F. Als Polymerisationsinitiatoren werden übliche, in der Wärme Radikale bildende organische Peroxide eingesetzt. Geeignete Initiatoren sind z.B. Dibenzoylperoxid, tert.-Butylperoktoat, tert.-Butylperbenzoat, Dicumylperoxid, Di-tert.-Dibutyl-peroxid und Perketale, wie z.B. Trimethylcyclohexanonperketal, sowie Percarbonate. Auch CC-labile Verbindungen und Azoverbindungen sind geeignet. Die Initiatoren sind in den Formmassen in Mengen von 0,1 bis 1 Gew.-%, vorzugsweise von 0,4 bis 0,7 Gew.-% enthalten.
G. Als weitere übliche Zusatzstoffe kommen in Frage:
   - Gleitmittel, wie Zink-, Magnesium- und Calciumstearat sowie Polyalkylenetherwachse, vorzugsweise in Mengen von 0,1 bis 2 Gew.-%.
   - Inhibitoren, wie Hydrochinon, substituierte Hydrochinone, Brenzkatechin, tert.-Butylbrenzkatechin, kernsubstituierte Brenzkatechine, Chinone, wie Benzochinon, Naphthochinon, Chloranil, Nitrobenzole, wie m-Dinitrobenzol, Thiodiphenylamin, N-Nitrosoverbindungen, wie N-Nitrosodiphenylamin und Salze von N-Nitrosocyclohexylhydroxylamin sowie deren Gemisch. Als zusätzliche Stabilisatoren eignen sich aus Salze des zweiwertigen Kupfers, beispielsweise Kupfernaphthenat oder -oktoat und quarternäre Ammoniumsalze. Die Inhibitoren sind in den Formmassen vorzugsweise in Mengen von 0,005 bis 0,1 Gew.-% enthalten.
   - Eindickmittel, wie Oxide oder Hydroxide des Lithiums, Magnesiums oder Calciums, Aluminiums oder Titans. Bevorzugt ist Magnesiumoxid. Die Eindickmittel sind in der Formmasse vorzugsweise in Mengen von 0,1 bis 0,5 Gew.-% enthalten.

Die Formmassen werden hergestellt durch Vermischen der Komponenten, vorzugsweise auf üblichen Knetern oder Walzenmischaggregaten bei Raumtemperatur. Die kristallinen ungesättigten Polyester B werden zweckmäßigerweise vorher als Kristallitsuspension im ungesättigten Polyesterharz A dispergiert. Aus den BMC-Formmassen werden die Formkörper auf üblichen Duromer-Spritzgießanlagen hergestellt, wobei die Formmasse in ein beheiztes Werkzeug eingespritzt und dort bei Temperaturen zwischen 150 und 200°C gehärtet wird.

Die Formteile weisen eine gut lackierbare, kratzfeste Oberfläche auf. Es hat sich überraschenderweise gezeigt, daß Scheinwerferreflektoren, die unter Verwendung von kristalline Polyester enthaltenden BMC-Formmassen hergestellt wurden, ohne vorherige Lackierung mit Aluminiumdampf metallisiert werden können, wobei eine perfekt ebene und glatte Reflexionsschicht erhalten wird, die hervorragend gut auf dem Untergrund haftet.

### Beispiele

Die in den Beispielen genannten Teile und Prozente beziehen sich auf das Gewicht.

### 1. Herstellung der ungesättigten Polyesterharze

a) Amorpher UP in Styrol Es wurde ein ungesättigter Polyester aus Maleinsäureanhydrid und Propylenglykol im Molverhältnis 1:1,05 durch Schmelzekondensation bei 200°C unter Stickstoff hergestellt und 65 %ig in Styrol gelöst. Der ungesättigte Polyester hatte eine Säurezahl von 28. Die styrolische Lösung wurde mit 150 ppm Hydrochinon stabilisiert.
b) Ein kristalliner Polyester mit Säurezahl 20 wurde hergestellt durch Schmelzekondensation von Fumarsäure, Adipinsäure und Butandiol-1,4 im Molverhältnis 1:0,25:1,25. Der ungesättigte Polyester hatte einen Erweichungspunkt (nach Krämer, Sarnow, Nagel) von 112°C. Der Polyester wurde gebrochen.

### 2. Herstellung der Kristallitsuspension

In einem Rührgefäß, das mit Ankerrührer, Thermometer und Mantelbeheizung ausgerüstet war, wurde eine Mischung aus 500 Teilen UP-Harz 1a, 200 Teilen Styrol und 300 Teilen kristalliner Polyester 1b nach Inhibierung mit 200 ppm 2,6-Dimethylchinon auf 100°C erwärmt, bis der kristalline Polyester unter Rühren (30 Umdrehungen pro Minute) in Lösung ging. Danach kühlte man innerhalb von 8 Stunden mit gleicher Rührgeschwindigkeit auf Raumtemperatur ab (25°C) und erhielt eine fließfähige Suspension mit einem Trockengehalt von 64 % und einer Viskosität von 6100 mPa·s (23°C).

### 3. Herstellung der BMC-Preßmassen

### Formulierung I

100 Teile Kristallitsuspension gemäß 2 (50 Teile UP-Harz, 30 Teile kristalliner Polyester, 20 Teile Styrol)
4,5 Teile Zink-Stearat
1,5 Teile Tert.butyl-perbenzoat
150 Teile Aluminiumtrihydrat
90 Teile Schnittglasfasern 12 mm lang

### Formulierung II

60 Teile Kristallitsuspension gemäß 2 (d.h. 30 Teile UP-Harz, 18 Teile kristalliner Polyester, 12 Teile Styrol)
40 Teile Polymethylmethacrylat-Lösung (14 Teile PMMA, 26 Teile Styrol)
4,5 Teile Calcium-Stearat
1,5 Teile Tert.butyl-perbenzoat
320 Teile Kreide (Millicarb)
55 Teile Schnittglasfasern 3 bis 4 mm lang
Zur Herstellung der Massen werden die flüssigen Komponenten gemischt und mit ca. 50 % des Füllstoffs zu einer Paste homogenisiert. Der restliche Füllstoff und die Glasfasern werden in einem Kneter zugemischt.

### 4. Verarbeitung der BMC-Massen

I. Herstellung eines Serviertabletts
   In ein auf 140 bis 150°C geheiztes Werkzeug wird die BMC-Masse I in Portionen eingelegt und 100 sec lang verpreßt.
   An einem 15 x 20 mm großen Probekörper wird mit einem Lineartribometer die Kratzfestigkeit bestimmt, und dabei ein Abrieb von 0,06 mg gemessen. Bei einem Vergleichsversuch ohne Zusatz des kristallinen Polyesters (d.h. 100 Teile UP-Harz statt der Kristallitsuspension) wurde ein Abrieb von 0,1 mg gemessen.
II. Herstellung eines Scheinwerferreflektors
   Das Werkzeug für die Herstellung des Scheinwerferreflektors wird auf 150 bis 160°C Werkzeugoberflächentemperatur beheizt. Die BMC-Masse wird im Verlauf von 1 bis 5 sec in das Werkzeug injiziert und dort 40 bis 80 sec lang ausgehärtet.
   Nach dem Entformen wird der Reflektor gereinigt und einer UV-Behandlung zugeführt. Aluminium wird im Vakuum mit einer Schichtdicke von 80 bis 100 mm aufgedampft. Es entsteht eine glatte Oberfläche, ohne daß vor der Behandlung eine Lackierung erfolgen mußte.

## Patentansprüche

1. Verwendung von härtbaren, teigigen Formmassen (BMC) aus ungesättigten Polyesterharzen, Glasfasern, Füllstoffen und Peroxiden zur Herstellung von Formkörpern mit verbesserten Oberflächeneigenschaften, dadurch gekennzeichnet, daß die Formmasse 2 bis 12 Gew.-% eines in Styrol bei Raumtemperatur nicht löslichen, kristallinen ungesättigten Polyesters enthält.

2. Verwendung von Formmassen nach Anspruch 1, dadurch gekennzeichnet, daß sie folgende Zusammensetzung haben:
A. 8 bis 20 Gew.-% eines ungesättigten Polyesterharzes in Form einer styrolischen Lösung,
B. 2 bis 12 Gew.-% eines in Styrol unlöslichen, kristallinen ungesättigten Polyesters,
C. 0 bis 12 Gew.-% einer Niederschrumpf-Polymerkomponente,
D. 8 bis 20 Gew.-% Verstärkungsfasern,
E. 40 bis 70 Gew.-% Füllstoffe,
F. 0,1 bis 1 Gew.-% Polymerisationsinitiatoren, sowie
G. gegebenenfalls weitere Zusatzstoffe, wobei sich die Prozentzahlen auf 100 addieren.

3. Verwendung von Formmassen nach Anspruch 1, dadurch gekennzeichnet, daß der kristalline Polyester B ein Kondensationsprodukt aus Fumarsäure, gegebenenfalls zusammen mit Terephthalsäure, einerseits und Butandiol-1,4 andererseits ist.

4. Verwendung von Formmassen nach Anspruch 1, dadurch gekennzeichnet, daß die Niederschrumpf-Polymerkomponente C Polymethyl-methacrylat oder ein gesättigter Polyester ist.

5. Verwendung von Formmassen nach Anspruch 2 zur Herstellung von kratzfesten Artikeln für den Haushalt- und Sanitärbereich, dadurch gekennzeichnet, daß sie 0 bis 12 Gew.-% der Niederschrumpf-Polymerkomponente C enthalten.

6. Verwendung von Formmassen nach Anspruch 2 zur Herstellung von direkt metallisierbaren Scheinwerferreflektoren, dadurch gekennzeichnet, daß sie 5 bis 12 Gew.-% der Niederschrumpf-Polymerkomponente C enthalten.

7. Verwendung von Formmassen nach Anspruch 2 zur Herstellung von gut lackierbaren Elektro- und Automobilteilen, dadurch gekennzeichnet, daß sie 5 bis 12 Gew.-% der Niederschrumpf-Polymerkomponente C enthalten.
